# EUROPEAN PATENT APPLICATION

(11) **EP 2 031 584 A1**
(43) Date of publication of application: **04.03.2009**
(21) Application number: 08162390.2
(22) Date of filing: 14.08.2008
(51) Int. Cl.: G10L 21/02, A63F 13/12, G10L 21/00

(54) **A voice synthesis method and interpersonal communication method, particularly for multiplayer online games**

(30) Priority: 31.08.2007 FR 0706137
(71) Applicant: Alcatel Lucent, 75008 Paris (FR)
(72) Inventor: Squedin, Sylvain, 91070 BONDOUFLE (FR); Papillon, Serge, 75014 PARIS (FR)
(74) Representative: Sciaux, Edmond

(57) **Abstract**

A voice synthesis method, said method comprising a step of choosing a synthetic voice from among a set of voices having predetermined spectral signatures and a step of recording the natural voice of a first person, the method comprising a step of transforming the natural recorded voice so as to conform with the spectral signature of the chosen synthetic voice, the natural voice thereby transformed being recorded, said method comprising a step of determining at least one situation parameter for a first character from among a set of predefined parameters, each predefined parameter being associated with a spectral alteration of the emitted voice, the determined situation parameter particularly characterizing the environment or the physical or psychological state of the character, the method comprising a step of spectrally altering the transformed natural voice so as to conform with the spectral alteration associated with the character's situation parameter.

## Description

The invention pertains to the technical field of real-time interactive games.

In particular, the game pertains to multiplayer online games, such as MMOGs (*Massively Multiplayer Online Games),* MMORPGs (*Massively Multiplayer Online Role-Playing Games*), MMOFPSs (*Massively Multiplayer Online First-Person Shooters*), and UMMORPGs (*Ultra Massively Multiplayer Online Role-Playing Games*).

Multiplayer online games have three characteristics: They are accessible online, over the Internet; they have a persistent universe, meaning that they are accessible seven days a week; and they are open to a large number of players (typically more than 128 players, and possibly more than 15,000 players in the example of a UMMORPG such as *Eve Online*).

The expression "role-playing game" has been used since the 1970s to designate a tabletop game (essentially composed of dialogue) wherein multiple players (in practice, about a half-dozen) gather around a table to assume the roles of characters in an adventure which they experience through interaction with a game master, following a scenario and written rules, but while improvising. The game master gradually introduces the elements of a plot whose main threads he alone knows, with the other players reacting to the situations offered to them by playing the roles of imaginary characters, with their own traits and faults, and their own strengths and weaknesses.

In the forgotten realms of *Dungeons and Dragons,* created in 1974, the characters may, for example, be elves, orcs, dragons, or humans. In *The Call of Cthulhu,* created in 1981 and inspired by the works of Lovecraft, the characters are humans (investigators) called in to investigate crime scenes, with the game master (the Keeper of Arcane Lore) most commonly creating a horror scenario with strange or magical phenomena.

Most role-playing games draw upon a universe based in high fantasy; this literary genre, half-way between traditional fantasy and science-fiction, mixes tales, legends, and myths. For this literary genre, the normal reference is the English writer *Tolkien* (*The Lords of the Rings,* 1954).

Tabletop role-playing games do not allow for the creation of persistent virtual worlds. They also do not allow for the participation of a large number of players without vastly complicating the preparatory work required of the game master. Finally, tabletop role-playing games do not allow for real-time interactivity between players.

Methods for improving the immersion of players into virtual worlds have been constantly developing.

Several stages of this development may be mentioned. An initial form of persistent virtual world was the MUD (*Multi User Dungeon),* which appeared in American universities in 1979. A purely text-based interface enabled players to travel within a virtual world. During the 1980s, as part of the *Habitat* project, simulation tests were conducted for a persistent world inhabited by small creatures known as avatars. In September 1996, *Meridian* 59 (merdian59.neardeathstudios.com) was released. This was the first MMORPG to implement 3D modeling and first-person views, i.e. views which display what the player sees: The avatar is no longer directly visible on-screen; the player experiences the virtual universe through the eyes of his avatar, and moves it directly.

Merdian 59 was essentially PvP (*Player versus* Player)-oriented: The players competed with one another. Current MMORPGs also enable other game mechanics:
- PvE (*Player versus Environment*): A collaborative effort between players to compete against the computer-controlled environment, such as fighting monsters, completing quests, and exploring dungeons;
- RvR (*Realm versus Realm*), a form of group PvP, between players belonging to rival realms or factions (such as *Dark Age of Camelot* and *Warhammer Online*);
- instances or instanced zones, allowing a zone of a monde virtuel to be duplicated, thereby avoiding overpopulated zones and increasing difficulty (such as in *Anarchy Online*).

MMORPGs combine principles of role-playing games and online games, and are played online over the Internet.

As with any role-playing game, the player assumes the role of an avatar, i.e. a fictional character that he creates and develops within a virtual world. Having done this, he will interact with the program-controlled environment and with the other players.

Current MMORPGs take place in mythical alternate worlds which are medieval or ancient in nature, in which heroes, warriors, imaginary creatures, magic and witchcraft, ancient cultures, and supernatural elements generally coexist. This theme has been used in MMORPGS such as *Ultima Online* (1997), *Lineage* (1998), *Everquest* (1999), *Guild Wars* (2005), and *World of Warcraft* (2005). Others additionally use futuristic or science-fiction elements, such as *Anarchy Online* (2001), *Eve Online* (2003) or *Star Wars Galaxies* (2003). Many MMORPGs have been released to tie in with successful films: *Pirates of the Caribbean, Star Wars* (2003), *The Lord of the Rings* (2007), *Star Trek* (startrekonline.com), and *The Matrix Online.*

MMORPGs are very popular. The number of players may be very high. For example, more than 2.5 million active subscriptions for the game *Lineage* were counted in 2002. In the year 2006, the worldwide MMOG marker represented more than 13 million paid subscriptions, and sales of $2.5 billion USD (Interacting with Computers 2007, pp.167- 179). On January 17, 2007, about 2.67 million characters inhabited the Second Life universe (Papagiannidis et al., Technological Forecasting & Social Changes 2007). According to the company *Game Flier,* the MMORPG *Ragnarok Online* had about 370,000 players online in December 2004 (Computer Networks 2006, pp. 3002-30023).

Communication in MMORPGs is primarily sent as text, in the same manner as discussions over IRC (*Internet Relay Chat).* Certain games offer discussion threads that are available to geographically close characters, to all the players on the server, or to all the players of the guild to which the player belongs (such as the IRC channel of the mafia family in the game *Omerta*)*.* The language is close to SMS jargon, for faster communication, using numerous English terms (even when speaking French).

Today, with the coming of instant messaging and voice-over IP software programs such as *TeamSpeak,* which enable voice conversations between an unlimited number of people (limited by the chaos that forty people speaking at the same time can cause) communication between players may be voice-based.

The document WO03/015884 describes, in summary, a voice-based communication system between players of massively multiplayer online games. Voice modulation is provided: For every character, a modulation range is available to the player, enabling a male player to give his avatar a higher-pitched female voice.

The document US 6987514 describes a voice transformation module for a mobile communication terminal, for avatars in an online gaming system. Voice modification techniques are mentioned (for example, reverberation). These techniques are allegedly able to transform the player's voice, while keeping it comprehensible and expressive.

The document US 2003/0115063 describes a voice control method for controlling the voice of an avatar, said method comprising a step of converting the natural voice of a player based on the avatar's attributes, such as its age, sex, height, or weight. First, the player chooses his type of avatar. Next, the method described in that prior document enables the voice to be adjusted based on the avatar's physiological characteristics. In this manner, for example, when a male player chooses a female avatar, the player's voice spectrum is shifted to higher frequencies. When a child chooses an elderly avatar, the child's voice spectrum is shifted to lower frequencies. Low-frequency amplitudes are increased when the avatar's weight is greater than that of the player. The player's voice conversion settings may change over the course of the game to take into account changes in the avatar, such as aging or changes in weight.

The human voice is complex, with each of its general traits (accent, extent, pitch, inflection, intensity, magnitude, range, register, timbre, volume) acting alone or in combination during interpersonal exchanges, for conveying emotions, feelings, or psychological states.

As a result of this complexity, in the virtual universes available online, the feeling of reality is often mediocre, as the voices of the avatars are not plausible.

Inventors have sought to understand the reasons why the voices of the avatars often lack realism. Three causes have been identified. First, the voice of the avatar may be unrealistic when spoken, because this voice does not convey the emotions, feelings, or physiological or psychological states of the avatar within the game. Second, the voice of the avatar may be unrealistic when transmitted, because this transmission does not take into account the environment of the avatar which is speaking. Third, the voice of the avatar may be unrealistic when received, because the reception does not take into account the environment or psychological and physiological characteristics of the person who is supposed to hear or listen it.

In this manner, for example, in the *Everquest* universe, elves, orcs, trolls, dwarves, gnomes, halflings, and humans co-exist in a pseudo-medieval universe that spans thousands of square kilometers. In this world, every player may play a specific class, such as a warrior, hunter, bard, or priest. The player may want a warrior's voice to be serious and poised under normal circumstances, but capable of expressing various other emotions and states. For example, the voice will be slower and include panting after a long run. Fear or drunkenness may cause the voice to stutter. An avatar's voice will not be transmitted in the same way if the avatar is in a dungeon or an open space. The avatar's voice will not be perceived in the same way if the person who is supposed to be heard is in a quiet or noisy environment, or if the person is disturbed, distracted, or has a partial hearing deficiency, whether short-term or permanent.

The invention intends to solve these various problems.

To that end, the invention pertains, in a first aspect, to a voice synthesis method, said method comprising a step of choosing a synthetic voice from among a set of voices having predetermined spectral signatures, and a step of recording the natural voice of a first person, said method comprises a step of transforming the recorded natural voice so as to conform to the spectral signature of the chosen synthetic voice, the natural voice transformed in this manner being recorded, said method being characterized in that it comprises a step of determining at least one situation parameter for a first character from among a set of predefined parameters, each predefined parameter being associated with a spectral alteration of the sent voice, the determined situation parameter particularly characterizing the environment or the physical or psychological state of the character, said method comprising a step of spectrally altering the transformed natural voice so as to conform with the spectral alteration associated with the situation parameter of the character.

The invention pertains, in a second aspect, to an interpersonal communication method, said method comprising a voice synthesis as described above, based on the natural voice of a first person, for obtaining an altered natural voice associated with a first character, said method further comprising a step of determining at least one situation parameter for a second character from among a set of predetermined parameters, each predefined situation parameter being associated with a spectral alteration of perceived sounds, the determined situation parameter particularly characterizing the environment or the physical or psychological state of the second character, said method comprising a step of spectrally altering the voice of the first character so as to conform with the spectral alteration associated with the situation parameter of the second character.

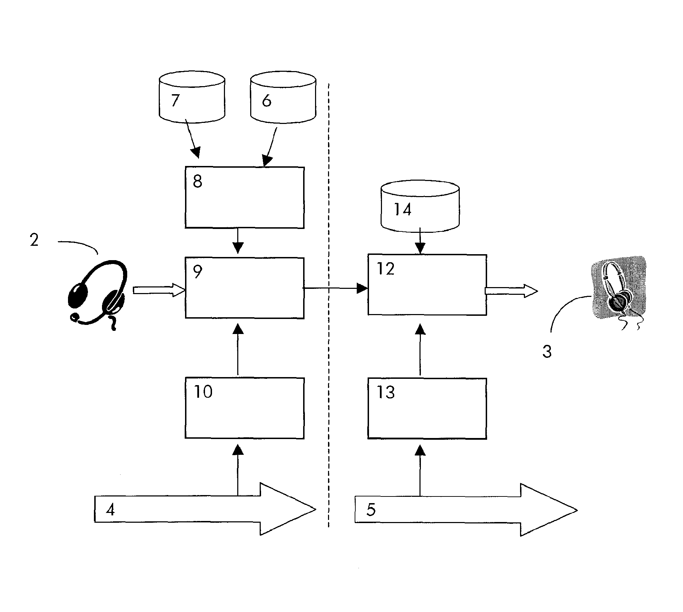

Other subjects and advantages of the invention will become apparent upon reading the following description of embodiments, given with reference to the attached figure, which is a schematic view of a voice processing method.

For the remainder of this description, the voice processing method will be described with reference to an application for MMORPGs. However, it is understood that the method may find applications in other contexts, such as online system maintenance or learning. The method particularly enables communication between multiple people, as each sender may choose to mask his voice, for reasons of confidentiality, modesty, game-related purposes, or effectiveness. For example, when learning languages, a person may feel more comfortable knowing that his voice will not be recognized by the teacher or other members of the virtual community.

In the sole attached figure, a dashed line 1 separates the first player 2 and a second player 3. It is understood that this vertical line 1 does not represent a physical separation, as the players may be in the same room. The vertical line 1 makes it possible to distinguish the game's progress 4 on the end of the player 2 who is sending the voice from the game's progress 5 on the end of the player 3 who is receiving the voice.

The players 2, 3 have all chosen an avatar and its attributes (height, weight, age, sex, etc.). Based on this choice, a type of voice is extracted from a database 6. If applicable, each player 2, 3 may modify the avatar's voice by using customization tools offered by a server 7. For example, a player may add reverberation. The choice of voice and its customization are carried out by the module 8.

When a player 2 starts to speak, his natural voice undergoes a first processing by a module 9 in order to obtain a transformed voice that conforms with the chosen avatar, said transformed voice being customized, if applicable, by the player.

In parallel, a module 10 continuously analyzes the situation of the player 2. Here, the term "situation" particularly denotes the likely emotional, psychological and physiological state of the avatar, based on the experiences and attributes of the avatar. For example, the avatar may be injured or tired. The term "situation" also denotes the environment in which the avatar is located. For example, the avatar may be in a dungeon, a cavern, or a crowd.

Based on the avatar situation data provided by the module 10, the voice processing module carries out an "alteration" of the avatar's voice. Here, the term "alteration" denotes a modification in the normal spectrum of the avatar's voice.

The altered voice is transmitted to a processing module 12. This processing module 12 receives information from an analysis module 13 continuously analyzing the situation of the avatar of the player 3. Here, the term "situation" particularly denotes the likely emotional, psychological and physiological state of the avatar, based on the experiences and attributes of the avatar. For example, the avatar of the player 3 may be injured or tired. The term "situation" also denotes the environment in which the avatar is located. For example, the avatar may be in a dungeon, a cavern, or a crowd.

Based on the data received by the module 13, the processing module 12 filters the voice of the avatar of the player 2. This filtering is performed in accordance with filtering tools offered by a server 14.

The voice of the avatar of the player 2 is transmitted to the player 3 after being filtered.

The following example illustrates a few advantages of the method.

Young Alice is playing with her uncle Bob. The avatar A chosen by Alice is a heavyset, elderly druid. The module 9 ensures that the voice which reaches Bob is not Alice's natural voice, but rather a masculine voice corresponding to the chosen body type and age of avatar A.

The avatar A has just been attacked by a monster and was unable to avoid becoming injured. This injury alters the voice of A, such as by lowering its timbre.

Alice wants to warn Bob's avatar B about the monster. At that moment, it happens that B is swimming to shore, which the module 13 detects. Within the server 14, a specific spectral filter corresponds to the situation "the avatar is swimming." This filter is applied to the voice of A by the module B. Thus, until B has reached the shore, A's voice will be partially muffled when it reaches B.

The method strengthens the feeling of immersion experienced by members of a community, such as in massive online games.

## Claims

1. A voice synthesis method, said method comprising:
a step of recording the natural voice of a first person,
said method being **characterized in that** comprises:
a step of determining at least one situation parameter of a character chosen by a second person, from among a set of predefined parameters, each predefined parameter being associated with a spectral alteration of perceived sounds, the determined situation parameters particularly characterizing the environment or the physical or psychological state of the character,
a step of spectrally altering the recorded natural voice so as to conform with the spectral alteration associated with the situation parameter of the character chosen by the second person.

2. An interpersonal communication method, said method comprising:
a voice synthesis step according to claim 1, based on the natural voice of a first person, for obtaining an altered natural voice,
a step of choosing a synthetic voice from among a set of voices having predetermined spectral signatures,
a step of transforming the altered natural voice so that it conforms with the spectral signature of the chosen synthetic voice, the voice transformed in this manner being recorded,
a step of determining at least one situation parameter for a character chosen by the first person, from among a set of predefined parameters, each predefined parameter being associated with a spectral alteration of the perceived sounds, the determined situation parameter particularly characterizing the environment or the physical or psychological state of the character chosen by the first person,
a step of spectrally altering the transformed voice so as to conform with the spectral alteration associated with the situation parameter of the character associated with the first person.
